# FASCICULE DE BREVET EUROPEEN

(11) **EP 1 051 578 B1**
(45) Date de publication et mention de la délivrance du brevet: **26.05.2004**
(21) Numéro de dépôt: 99900996.2
(22) Date de dépôt: 26.01.1999
(51) Int. Cl.: F16L 39/04, F16L 11/22

(54) **FAISCEAU PLURIFONCTIONNEL, ET ROBOT INDUSTRIEL AINSI EQUIPE**
MULTIFUNKTIONSBÜNDEL UND DAMIT AUSGERÜSTETER INDUSTRIEROBOTER
MULTIPURPOSE GROUP, AND INDUSTRIAL ROBOT EQUIPPED THEREWITH

(30) Priorité: 26.01.1998 FR 9800804
(43) Date de publication de la demande: 15.11.2000
(73) Titulaire: LEONI elocab GmbH, D-91166 Georgensgmünd (DE)
(72) Inventeur: Julien, Régis, 78730 Saint Arnoult (FR); Antonio-Julien, Monique, 78730 Saint Arnoult (FR)
(74) Mandataire: Freier, Rüdiger (DE)
(86) Numéro de dépôt international: PCT/FR1999/000144
(87) Numéro de publication internationale: WO 1999/037947

(56) Documents cités:
- EP-A- 0 593 786
- DE-C- 2 940 868
- FR-A- 2 554 904
- GB-A- 2 068 785
- US-A- 3 765 728

## Description

La présente invention concerne un faisceau plurifonctionnel, pour assurer une liaison plurifonctionnelle entre deux ensembles dont l'un au moins est mobile par rapport à l'autre, en particulier dans un robot industriel, ou encore entre un tracteur et une remorque utilitaires routiers. L'invention vise ainsi, plus particulièrement les matériels industriels et/ou relativement lourds.

La présente invention concerne également un robot industriel ainsi équipé, en particulier un robot de manutention.

Les robots industriels comprennent en général un socle fixe et un outil mobile relié au socle fixe par un support à géométrie variable présentant souvent de nombreux degrés de liberté.

L'outil est en général un appareil sophistiqué nécessitant de nombreuses liaisons qui peuvent être de diverses natures, électriques, fluidiques, optiques, etc..., avec des appareils de commande ou d'alimentation portés par le socle ou immobiles par rapport à celui-ci. Il est connu de réaliser pour cela des liaisons souples, regroupées en faisceau. Ces faisceaux sont coûteux, encombrants, et nécessitent de nombreuses précautions. En particulier, il faut que la longueur et la disposition du faisceau soient compatibles avec toutes les positions et mouvements possibles de l'outil par rapport au socle. En particulier, il faut que pour toutes les positions de l'outil le faisceau trouve une configuration en courbe acceptable, sans formation de plis. En outre, chaque ligne ou conduit composant le faisceau doit être protégé contre les agressions mécaniques, chimiques, etc...

Par conséquent, les faisceaux actuels pour robot sont lourds et coûteux.

Le document DE 29 40 868 C2 montre un faisceau plurifonctionnel pour un tour de dentiste, qui présente à une extrémité une transition étanche, continue et sans raccordement d'une ligne de liaison interne vers l'extérieur du faisceau.

On connaît pour d'autres applications, par exemple d'après le FR-A-2 697 378 et le EP-A-00 80 591, des canalisations qui sont cloisonnées intérieurement pour former des passages distincts pour deux fluides différents, ou pour un fluide d'une part et des liaisons électriques d'autre part. Ce type de conduit est très coûteux à fabriquer et nécessite une adaptation très coûteuse à réaliser pour chaque cas d'application précis.

Le but de la présente invention est de proposer un faisceau plurifonctionnel, compact, économique et performant.

L'invention concerne un faisceau plurifonctionnel tel que défini par la revendication 1.

La ligne de liaison peut avoir toute fonction telle que électrique, optique, adduction d'un second fluide, etc..., selon l'application. Le conduit de canalisation n'a pas besoin d'être réalisé d'une manière particulière car la ligne de liaison est de préférence simplement montée à l'intérieur du conduit, sans y occuper un compartiment spécifique ni être intégrée à la paroi du conduit.

Cette disposition étonnamment simple procure des avantages substantiels. Le coût du conduit n'est pas augmenté. Outre la canalisation du fluide, le conduit sert également de gaine de protection pour la ligne de liaison. Celle-ci n'est donc plus exposée directement aux agressions venant de l'extérieur. En outre, le conduit et la ligne de liaison s'étendant à son intérieur se protègent mutuellement à l'encontre de la formation de rayons de courbure trop petits lorsque le faisceau se déforme.

Dans une version avantageuse, le faisceau comprend à l'une au moins des extrémités du conduit de canalisation, un embout répartiteur assurant pour la ligne de liaison une transition étanche entre l'intérieur et l'extérieur du conduit de canalisation.

L'invention n'est pas limitée à un faisceau pour la transmission d'un seul fluide et d'un seul autre médium. La ligne de liaison peut elle-même être plurifonctionnelle, par exemple consister en un câble électrique à plusieurs voies. Il peut y avoir plusieurs lignes de liaison montées sensiblement parallèles à l'intérieur du conduit. L'une au moins de ces lignes peut elle-même consister en un conduit pour un second fluide.

Le faisceau selon l'invention peut également comprendre un second conduit dans lequel est monté le conduit de canalisation précité. Le second conduit achemine un second fluide dans l'espace annulaire compris entre la face intérieure du second conduit et la face extérieure du conduit de canalisation précité.

Selon des dispositions particulièrement avantageuses :
- la ligne de liaison peut tourner librement autour de son axe longitudinal dans les deux embouts et dans le conduit de canalisation;
- pour cela, la ligne de liaison pénètre dans chaque embout à travers un dispositif de joint tournant et elle est libre de toute attache avec le conduit de canalisation;
- il peut également être prévu que le conduit de canalisation peut tourner autour de son axe par rapport à l'un au moins des embouts, de préférence par rapport aux deux embouts, grâce à un dispositif à joint tournant installé entre l'extrémité du conduit de canalisation et l'embout répartiteur correspondant;
- un embout répartiteur comprend des moyens pour faire communiquer le conduit de canalisation avec deux conduits de raccordement distincts;
- un embout répartiteur comprend des moyens d'étanchéité indépendants les uns des autres pour le conduit de canalisation, au moins un conduit de raccordement, et le passage de traversée de la ligne de liaison;
- des moyens sont prévus pour désaccoupler de l'embout répartiteur le conduit de canalisation sans affecter le raccordement étanche du conduit de raccordement avec l'embout ni la traversée étanche de la ligne de liaison, et/ou pour désaccoupler de l'embout répartiteur le conduit de canalisation sans affecter le raccordement étanche du conduit de raccordement avec l'embout ni la traversée étanche de la ligne de liaison.

Selon un second aspect, l'invention concerne également un robot industriel comprenant un socle, un organe mobile relié au socle par une structure à géométrie variable, et un faisceau plurifonctionnel s'étendant entre le socle et l'organe, caractérisé en ce que le faisceau plurifonctionnel est conforme au premier aspect de l'invention.

D'autres particularités et avantages de l'invention ressortiront encore de la description ci-après, relative à des exemples non-limitatifs.

Aux dessins annexés :
- la figure 1 est une vue schématique en élévation d'un robot industriel selon l'invention;
- la figure 2 est une vue en élévation du faisceau selon l'invention, en configuration rectiligne;
- la figure 3 est une vue en coupe axiale, à échelle agrandie, d'une partie du faisceau de la figure 2;
- la figure 4 est une vue en coupe suivant IV-IV de la figure 3;
- la figure 5 est une vue schématique d'un embout répartiteur du faisceau, équipé d'une enveloppe d'habillage; et
- la figure 6 est une vue analogue à la figure 4 mais relative à une variante de réalisation;
- la figure 7 est une vue en coupe, avec demi-vues différenciées, d'un autre mode de réalisation de l'embout;
- la figure 8 est une vue de face du corps de l'embout de la figure 7;
- la figure 9 est une demi-vue en coupe pour une variante de réalisation de la traversée de la ligne de liaison;
- la figure 10 est une vue en coupe pour une variante de réalisation de la liaison de l'embout avec le conduit de canalisation; et
- la figure 11 est une vue schématique partielle d'un ensemble routier à semi-remorque, équipé d'un faisceau plurifonctionnel selon l'invention.

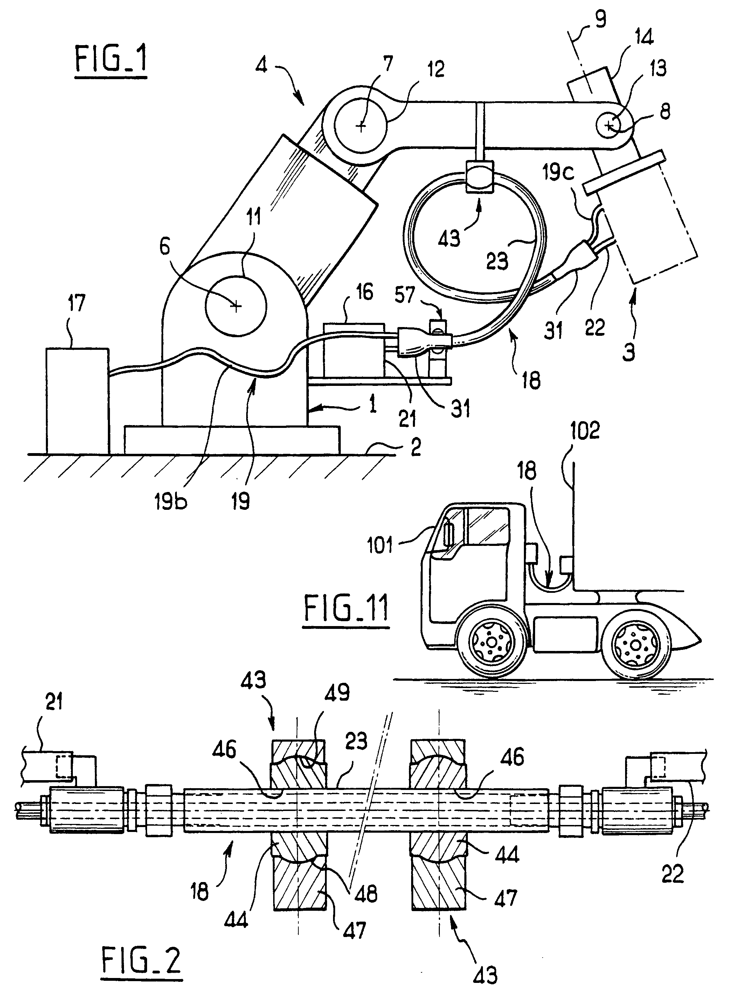

Dans l'exemple représenté à la figure 1, le robot comprend un socle 1 monté fixement sur un sol 2, et un outil 3 qui n'est illustré que très schématiquement. Il peut s'agir d'un outil de manipulation, de soudage, d'usinage, ou d'un outil complexe combinant plusieurs opérations. L'outil 3 utilise, pour son fonctionnement, au moins un fluide de travail, par exemple hydraulique, pneumatique ou sous la forme d'un fluide de refroidissement tel que de l'eau. L'outil 3 utilise en outre de l'énergie électrique et/ou il échange des signaux tels qu'électriques ou optiques pour sa commande.

L'outil 3 est relié au socle 1 par l'intermédiaire d'une structure à géométrie variable 4 comprenant plusieurs axes de rotation 6, 7, 8 et 9 représentés à titre d'exemple. La structure 4 donne à l'outil 3 la mobilité nécessaire, par rapport au socle 1, pour la tâche à effectuer par le robot. Chaque axe 6, 7, 8 ou 9 peut être associé à un moyen de motorisation tel qu'un moteur pas à pas 11, 12, 13, 14. Le robot comprend en outre une centrale fluidique 16, c'est à dire hydraulique ou pneumatique, solidaire du socle 1, et une armoire 17, également immobile par rapport au socle 1. L'armoire 17 comporte par exemple des moyens d'alimentation en énergie électrique et/ou des appareils de commande électriques, électroniques ou optiques et/ou des moyens pour transmettre de l'énergie électrique ou des signaux de commande et d'asservissement électriques, électroniques ou optiques. Un faisceau plurifonctionnel souple 18 relie la centrale 16 et l'armoire 17 d'une part avec l'outil 3 d'autre part pour assurer les liaisons nécessaires, pour l'alimentation en énergie et la commande de l'outil 3.

Dans l'exemple représenté, le faisceau 18 sert de chemin d'une part pour une ligne de liaison 19 allant de l'armoire 17 à l'outil 3 et d'autre part pour un fluide de travail entre un tube 21 raccordé à la centrale 16 et un tube 22 raccordé à l'outil 3.

Conformément à une particularité importante de l'invention, la ligne 19 (figures 2 à 4) comprend une partie médiane 19a qui s'étend à l'intérieur d'un conduit de canalisation 23 réalisé par exemple en polyuréthane. Le conduit 23 canalise le fluide de travail entre la centrale 16 et l'outil 3, et plus particulièrement entre les tubes de raccordement 21 et 22. La ligne 19 et le conduit 23 sont souples.

Le conduit 23 présente une face intérieure cylindrique 24 qui délimite l'espace 26 réservé au fluide. La partie médiane 19a de la ligne 19 est montée librement à l'intérieur de la face 24.

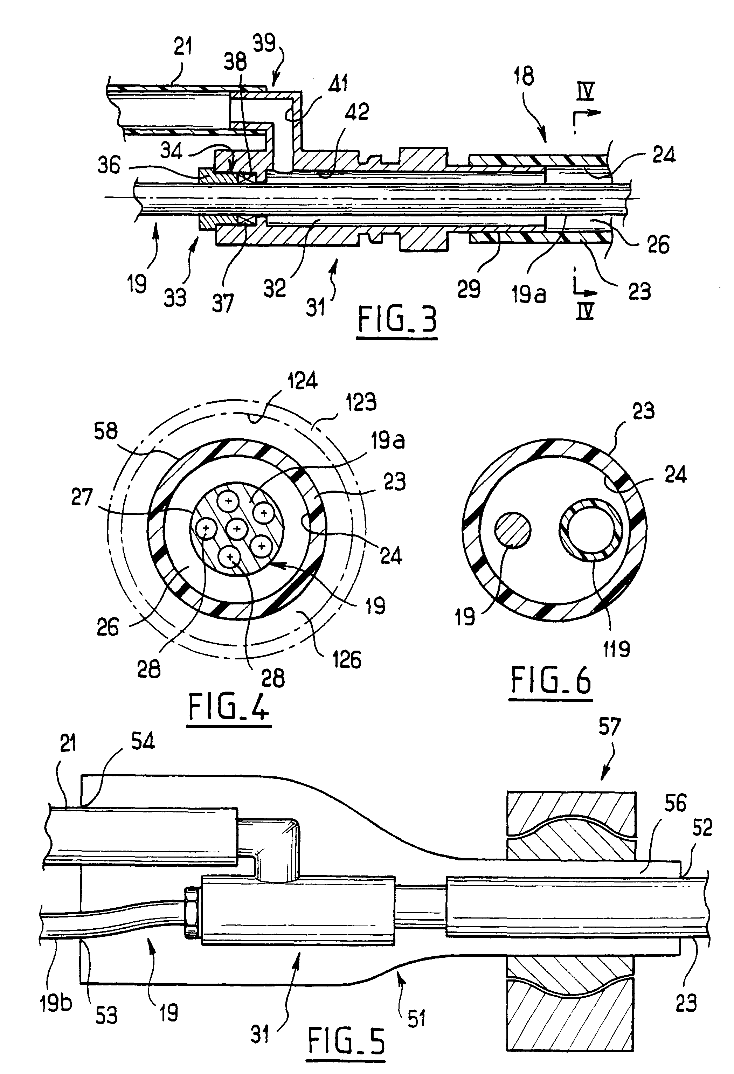

La coupe transversale de la figure 4 montre que la partie médiane 19a de la ligne 19 a des dimensions transversales plus petites que le diamètre de la face intérieure 24 du conduit 23. Ainsi, l'espace 26 réservé au fluide a une forme annulaire entre la face intérieure 24 du conduit 23 et la face périphérique extérieure 27, qui peut être également cylindrique, de la ligne 19. En règle générale, la ligne 19 est entourée de toute part par le fluide contenu par le conduit 23. Le fluide est en contact avec la face 27 sur tout son pourtour. Ceci n'exclut pas que la ligne 19 vienne toucher par endroits la face 24 en fonction des variations de géométrie du faisceau 18 lorsque l'outil 3 se déplace par rapport au socle 1.

La figure 4 illustre également que la ligne 19 peut être réalisée sous la forme d'un câble regroupant plusieurs lignes individuelles 28. Ces lignes peuvent être par exemple des lignes électriques ou des fibres optiques.

Chaque extrémité du conduit 23 est emmanchée de manière étanche sur une extrémité 29 d'un embout répartiteur 31 respectif. Ainsi, l'espace intérieur 26 du conduit de canalisation 23 communique avec une chambre 32 aménagée à l'intérieur de l'embout répartiteur 31.

La ligne 19 traverse axialement la chambre 32 et sort de l'embout répartiteur 31 par un passage étanche 33 opposé à l'extrémité 29 et co-axial avec celle-ci. Pour son étanchéité, le passage 33 comprend un dispositif presse-étoupe 34 dans lequel un poussoir de presse-étoupe 36 comprime axialement une garniture de presse-étoupe 37 contre le fond d'une chambre de presse étoupe 38. La garniture annulaire 37, comprimée axialement par le poussoir 36, réagit par une dilatation radiale vers l'intérieur contre la face extérieure de la liaison 19 et vers l'extérieur contre la paroi de la chambre 38.

On notera en particulier qu'avec le faisceau selon l'invention, les parties 19b, 19a et 19c composent ensemble une ligne de liaison 19 continue et sans raccord, en particulier sans aucune discontinuité entre la partie 19b (figure 1) allant de l'armoire 17 à un premier embout répartiteur 31, et la partie médiane 19a située dans le conduit 23, et sans aucune discontinuité entre cette partie médiane 19a et la partie 19c allant de l'autre embout 31 jusqu'à l'outil 3. La ligne de liaison 19 n'est liée mécaniquement au conduit 23 que par l'intermédiaire des embouts 31 et plus particulièrement des presse-étoupe 34.

Chaque embout répartiteur 31 comprend en outre un raccord latéral 39 dont le canal intérieur 41 communique avec la chambre 32 à travers la face latérale intérieure 42 de la chambre 32. Le diamètre de la face intérieure 42 de la chambre 32 est supérieur aux dimensions transversales de la ligne de liaison 19. Il y a ainsi dans la chambre 32, autour de la ligne de liaison 19, un espace annulaire occupé par le fluide et cet espace annulaire communique avec le canal 41 de l'embout latéral 39.

Sur l'extrémité libre du raccord latéral 39 est emmanché le tube 21 de liaison avec la centrale fluidique 16. Le cube 22 (figure 1) est emmanché sur l'extrémité libre du raccord latéral 39 de l'autre embout 31, proche de l'outil 3.

La fonction de l'embout répartiteur 31 est d'assurer pour la ligne de liaison 19 la transition étanche et continue entre l'intérieur et l'extérieur du trajet du fluide de travail.

La figure 2 montre deux supports 43 pour le faisceau 18. Chaque support 43 comprend une noix 44 traversée par un alésage axial 46 dans lequel le conduit 23 est emmanché avec un certain serrage. Chaque support 43 comprend également une lunette 47. La face extérieure 48 de la noix 44 et la face intérieure 49 de la lunette 47 ont des formes sensiblement sphériques complémentaires qui permettent à la noix 44 un certain mouvement de rotule à l'intérieur de la lunette 47 correspondante. Un tel support 43 est également visible de manière plus schématique à la figure 1 pour soutenir la partie centrale d'une spire formée par le faisceau 18 entre ses deux embouts répartiteurs 31.

Dans l'exemple représenté à la figure 5, l'embout 31 est emprisonné dans une enveloppe 51 qui emprisonne également les extrémités adjacentes du conduit de canalisation 23, du tube de raccordement 21 (ou 22 pour l'autre embout 31, visible à la figure 1) ainsi que le début de la région 19b (ou 19c) de la ligne 19. Cette enveloppe 51 peut être surmoulée pour emprisonner définitivement les liaisons entre les différents tubes et lignes et l'embout, de manière à conforter ces liaisons ainsi que leur étanchéité. L'enveloppe 51 peut également consister en deux demi-coques moulées qui se fixent de manière démontable autour de l'embout 31. On peut également envisager une coque unique que l'on ferme par une plaque frontale démontable comprenant un trou pour le passage de la partie 19b (ou respectivement 19c) de la liaison 19 et un autre trou pour le passage du tube de raccordement 21 (ou respectivement 22). Dans tous les cas, l'enveloppe 51 comprend une sortie 52 pour le conduit 23, une sortie 53 pour la liaison 19 et une sortie 54 pour le tube de raccordement 21. L'enveloppe 51 a un but esthétique et un but de protection. La région 56 de l'enveloppe 51 qui entoure l'extrémité du conduit de canalisation 23 peut être associée à un support 57 analogue aux supports 43 de la figure 2. Un tel support 57 est également représenté à la figure 1 en association avec l'embout 31 côté socle.

Dans une variante représentée par des traits mixtes à la figure 4, le conduit de canalisation 23 peut lui-même être monté librement à l'intérieur d'un second conduit 123 pouvant par exemple être également réalisé en polyuréthane souple. La face intérieure 124 du conduit 123 a un plus grand diamètre que la face extérieure 58 du conduit 23 de façon à ménager entre les faces 124 et 58 un espace annulaire 126 pour un second fluide. Les extrémités d'un faisceau ainsi perfectionné sont aménagées de manière correspondante. On peut par exemple prévoir deux embouts répartiteurs successifs. Le premier embout, adjacent à l'extrémité du conduit 123, sert alors à assurer pour le conduit de canalisation 23 et la ligne de liaison 19 située à son intérieur, la transition entre l'intérieur et l'extérieur du trajet prévu pour le second fluide. Le second embout, situé au-delà de celui qui vient d'être décrit, peut être analogue à celui représenté à la figure 3.

La figure 6 représente en coupe une deuxième variante dans laquelle le conduit de canalisation 23 renferme deux lignes de liaison 19, 119 s'étendant parallèlement l'une à l'autre mais extérieurement l'une à l'autre, toutes deux à l'intérieur de la face interne 24 du conduit 23. La ligne 19, qui n'est pas représentée en détail, peut par exemple consister en un câble regroupant plusieurs lignes individuelles comme à la figure 4. Dans l'exemple représenté à la figure 6, la ligne 119 est un conduit pour un fluide devant être séparé de celui canalisé par le conduit 23.

Avec une telle variante de réalisation, l'embout répartiteur est adapté pour présenter par exemple deux passages étanches tel que 33 disposés côte à côte, un pour la ligne 19, l'autre pour le conduit 119. Dans ce cas, les lignes 19 et 119 traversent toutes deux, sans discontinuité, l'embout répartiteur.

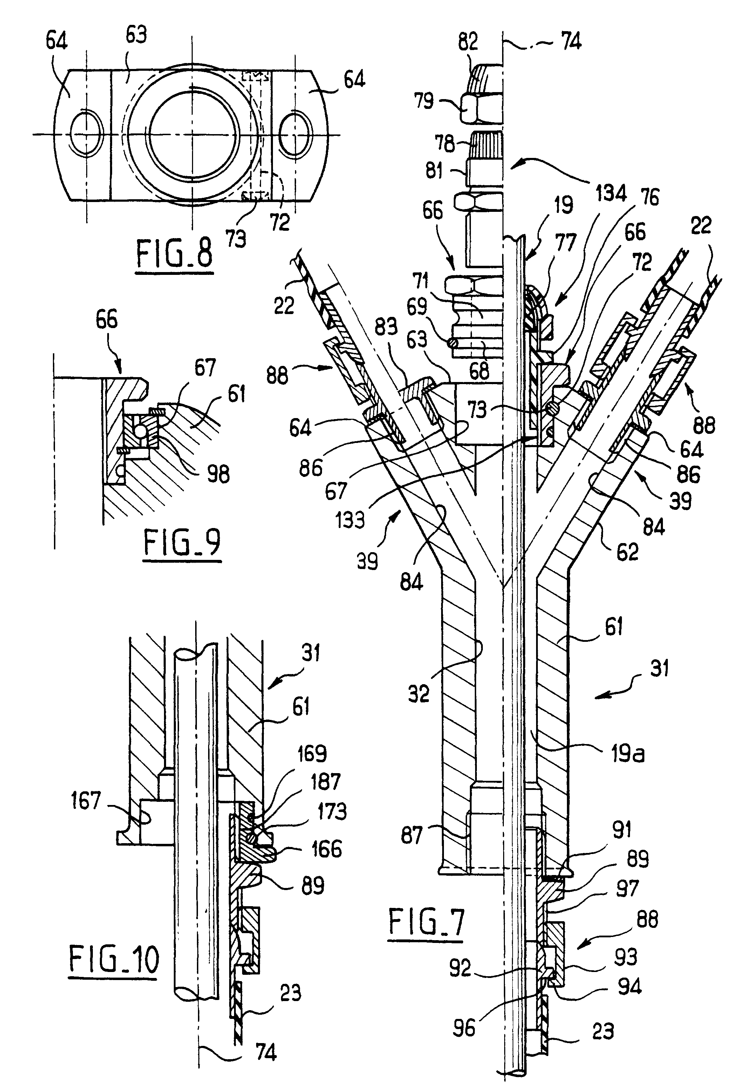

Dans l'exemple représenté aux figures 7 et 8, qui ne sera décrit que pour ses différences par rapport à celui de la figure 2, l'embout 31 comprend un corps de forme générale cylindrique 61. A son extrémité opposée au conduit de canalisation 23, le corps 61 présente un épanouissement 62 terminé par une face d'extrémité frontale 63 située entre deux faces d'extrémité en biseau 64.

Le passage 133 par lequel la ligne de liaison 19 sort axialement de l'embout 31 à travers la face frontale 63 n'est plus réalisé directement dans le corps 61 de l'embout, mais est constitué par l'orifice d'une douille 66 qui est montée avec possibilité de rotation axiale dans un contre-alésage 67 formé dans le corps 61. Avant assemblage, la chambre 32 débouche à l'extérieur de l'embout 31 à travers le contre-alésage 67. La douille 66 comporte sur sa paroi périphérique extérieure une gorge distale 68 recevant un joint torique 69 pour réaliser l'étanchéité entre la douille et le contre-alésage 67, et une gorge proximale 71, plus proche de l'extérieur du corps 61 que la gorge distale 68. La gorge proximale 71 coïncide axialement avec un perçage tangentiel 72 (voir aussi figure 8). Une goupille 73 engagée dans le perçage 72 et dans une partie de la gorge proximale 71 immobilise axialement la douille 66 dans le contre-alésage 67 tout en permettant à la douille 66 de tourner autour de l'axe longitudinal 74 de l'embout 31, qui coincide avec l'axe de la ligne de liaison 19. Le dispositif d'étanchéité statique 134 est maintenant monté entre la ligne de liaison 19 et la douille 66. Dans l'exemple représenté, le dispositif d'étanchéité statique 134 est d'un type disponible dans le commerce capable de convertir un serrage axial par vissage, en un appui radial étanche contre la paroi périphérique extérieure de la ligne de liaison 19. Le dispositif d'étanchéité 134 comprend un fût 76 vissable dans la douille 66, filetée intérieurement. Une bague d'étanchéité en élastomère 77 est fixée de manière étanche contre une paroi périphérique intérieure du fût 76. A son extrémité tournée vers l'extérieur de l'embout 31, le fût 76 est terminé par une couronne de doigts 78 capables de fléchir radialement vers l'intérieur pour comprimer la bague 77 contre la ligne de liaison 19. Le dispositif d'étanchéité statique 134 comprend enfin un écrou 79 vissable sur un filetage extérieur 81 formé sur le fût 76 en-deçà des doigts 78. L'écrou 79 porte une coupelle 82 venant comprimer radialement vers l'intérieur les doigts 78 lors du serrage de l'écrou 79 sur le filetage 81 du fût. En fin de serrage, il se produit une solidarisation de la ligne de liaison 19 avec le fût 76 et par conséquent avec la douille 66 en raison de la friction produite entre la paroi périphérique de la ligne de liaison 19 et la bague 77 fixée au fût 76. Ainsi, la ligne de liaison 19 peut tourner par rapport au corps 61 de l'embout 31, ou inversement, par rotation relative de la douille 66 et du corps 61 autour de l'axe 74.

Il est préféré que l'embout 31 à l'autre extrémité du faisceau plurifonctionnel comporte la même structure que celle qui vient d'être décrite pour permettre une rotation relative entre le corps de l'embout et la ligne de liaison 19. Ainsi, non seulement la ligne de liaison 19 traverse sans discontinuité ni raccordement l'ensemble du faisceau plurifonctionnel et en particulier les deux embouts 31 et la canalisation 23 qui les relie, mais en outre, la ligne de liaison est complètement libre en rotation par rapport aux deux embouts 31 et au conduit de canalisation 23. Cette version de l'invention souligne particulièrement bien l'idée qui est à la base de l'invention, qui n'est pas à proprement parler de réaliser comme on le retrouve souvent dans l'état de la technique une sorte de câble hétérogène regroupant différentes liaisons, mais plutôt d'utiliser une canalisation comme un simple guide de positionnement et de protection pour la ligne de liaison.

Selon une autre particularité de l'invention, la chambre 32 de l'embout 31 comprend deux raccords 39 pouvant communiquer chacun avec un tube de raccordement respectif 22, ce qui permet à l'embout répartiteur 31 de jouer en même temps le rôle de répartiteur du fluide canalisé par le conduit de canalisation 23 vers plusieurs points de consommation, par exemple si l'outillage du robot est animé par plusieurs moteurs fluidiques. Si l'application ne nécessite qu'un seul tube de raccordement, l'un des raccords 39 peut être obturé par un bouchon étanche 83.

En particulier, l'embout représenté à la figure 7 peut correspondre à l'embout côté outillage 3 de la figure 1. L'embout 31 côté socle du robot peut être conforme à celui de la figure 7 avec utilisation du bouchon 83 sur l'un des raccords 39 puisqu'il n'y a en principe qu'une seule source de fluide sous pression pour la canalisation 23. En variante, on peut utiliser côté socle du robot un embout 31 différent ne comportant qu'un seul raccord 39. L'épanouissement 62 du corps 61 peut alors avoir une forme dissymétrique par rapport à l'axe 74. Un tel embout dissymétrique peut également être utilisé avec un robot ne nécessitant qu'un raccord 39 du côté outillage. Par ailleurs, on peut également sans difficultés, réaliser un embout 31 comportant plus de deux raccords 39, par exemple disposés en éventail sur un épanouissement 62 plus évasé que celui de la figure 7, ou encore disposés en couronne autour de l'axe 74, etc.

Chaque raccord 39 comprend un alésage oblique 84 faisant communiquer la chambre 32 avec l'extérieur à travers la paroi frontale en biseau 64 associée, avant assemblage.

Chaque alésage 84 comporte un filetage intérieur 86 à partir de son embouchure. De même, du côté du conduit de canalisation 23, la chambre 32 débouche à travers un alésage intérieur fileté 87. Les conduits 22 et 23 sont chacun raccordés au corps 61 de l'embout par un dispositif d'accouplement démontable respectif 88 qui est représenté sous la forme d'un raccord standard comprenant un élément 89 vissé dans le filetage intérieur respectif 86 ou 87 avec interposition d'un joint d'étanchéité 91, un élément 92 sur lequel est emmanché le tube 22 ou 23 respectif, et un écrou de serrage 93 prisonnier de l'élément 92. L'écrou 93 présente un rebord radialement intérieur 94 prenant appui derrière un épaulement 96 de l'élément 92, et peut se visser sur un filetage extérieur 97 de l'élément 89 pour appuyer l'un contre l'autre de manière étanche et centrée, bout à bout, les éléments 89 et 92 et réaliser ainsi entre l'intérieur du tube 22 ou 23 respectif et la chambre 32 une continuité étanche vis à vis de l'extérieur. Pour alléger la figure 7, les références 89 à 97 n'ont été reportées qu'en bas de la figure 7 mais le dessin montre clairement que ces références sont transposables à chacun des deux dispositifs de raccordement 88 associés aux deux tubes de raccordement 22 en haut à droite et en haut à gauche de la figure 7. Ainsi, contrairement aux dispositifs de l'état de la technique, chaque tube 22 ou 23 a une fixation et une étanchéité autonomes avec le corps 61 de l'embout, ce qui permet l'utilisation de dispositifs de raccordement standard et le désaccouplement de l'un quelconque des tubes sans affecter le raccordement des autres tubes ni la traversée étanche de la ligne de liaison. De plus, le faisceau selon l'invention permet l'utilisation de dispositifs de raccordement standard ou en tout cas librement choisis à chaque extrémité de la ligne de liaison 19 au-delà des embouts 31, ainsi qu'à chaque extrémité, opposée aux embouts 31, de chacun des tubes de raccordement 22 ou du tube 21 de la figure 1.

Dans l'exemple représenté à la figure 9, qui ne sera décrit que pour ses différences par rapport aux figures 7 et 8, la liaison librement rotative entre la douille 66 et le corps 61 de l'embout 31 est réalisée non plus par une gorge proximale 71 avec laquelle interfère une goupille 73, mais au moyen d'un palier à roulement 98 interposé entre la face extérieure de la douille 66 et la face intérieure du contre-alésage 67 qui est élargi et conformé de manière correspondante.

Dans l'exemple représenté à la figure 10, qui ne sera décrit que pour ses différences par rapport à la figure 7 une possibilité de rotation autour de l'axe 74 est prévue entre le conduit de canalisation 23 et le corps 61 de l'embout 31. Pour cela, dans l'exemple représenté, l'élément 89 du dispositif de raccordement 88 associé au tube 23, au lieu d'être fixé au corps 61 par vissage dans une filetage intérieur 87 du corps 61, est vissé dans un filetage intérieur 187 d'un douille 166 dont le montage étanche et librement rotatif dans le corps 61 est tout à fait analogue à celui de la douille 66 de la figure 7. Le corps 61 présente à cet effet un contre-alésage 167 et la douille 166 comporte sur sa paroi périphérique extérieure une gorge distale pour un joint torique 169 et une gorge proximale pour une goupille de verrouillage axial 173. On permet ainsi à l'embout 31, notamment du côté outillage, de tourner indépendamment du conduit de canalisation 23 qui est par exemple soutenu comme représenté à la figure 1.

Dans l'exemple représenté à la figure 11, un faisceau plurifonctionnel 18 selon l'invention est installé entre le tracteur 101 et la semi-remorque 102 d'un ensemble routier articulé, pour alimenter la semi-remorque 102 en air comprimé ainsi qu'avec diverses commandes électriques. On réduit ainsi le nombre de liaisons mécaniquement séparées nécessaires entre le tracteur 101 et la semi-remorque 102 pour réaliser les fonctions usuelles nécessaires pour le freinage, l'éclairage, etc. Bien entendu, l'invention est utilisable de la même manière entre un camion porteur et une remorque attelée à ce camion.

Bien entendu, l'invention n'est limitée aux exemples décrits et représentés.

On pourrait par exemple combiner les variantes des figures 4 et 6 en plaçant le conduit de canalisation 23 de la figure 6 à l'intérieur d'un conduit de plus grand diamètre tel que 123 de la figure 4.

Le faisceau selon l'invention peut ne constituer qu'une partie des liaisons nécessaires entre organes mobiles l'un par rapport à l'autre dans un robot. Un robot peut comporter plusieurs faisceaux. Par exemple, par rapport au mode de réalisation très schématique de la figure 1, il pourrait y avoir, pour la commande pas à pas des moteurs 12, 13, 14 et leur alimentation en énergie, un autre faisceau entre le socle ou des unités solidaires du socle, et chacun de ces moteurs, qui sont mobiles par rapport au socle.

Les emmanchements des tubes et conduits sont représentés très schématiquement. En pratique, leur structure est adaptée aux fluides et aux pressions mises en oeuvres.

Une source de fluide de refroidissement pourrait être prévue en plus de la centrale 16 ou à la place de celle-ci, en fonction des besoins de l'outil utilisé.

La possibilité de rotation du conduit 23 relativement à l'embout répartiteur 31 selon la figure 10 est utilisable même si la ligne de liaison 19 est fixée au corps 61 comme illustré par exemple à la figure 3. Il est par ailleurs concevable de réaliser au moyen d'un dispositif à joint tournant, une possibilité de rotation entre les tubes de raccordement 21 ou 22 et le corps de l'embout 31. D'une manière générale, la fixité ou au contraire la possibilité de rotation du corps de l'embout par rapport à chaque fonction de liaison ou de canalisation passant par l'embout ou se raccordant à l'embout est décidée en fonction des mouvements prévisibles entre les différentes entités qui sont interconnectées mécaniquement par le faisceau.

## Revendications

1. Faisceau plurifonctionnel, comprenant un conduit (23) de canalisation d'un fluide et au moins une ligne de liaison (19) s'étendant le long du conduit (23), lequel possède une face intérieure (24) délimitant l'espace (26) réservé audit fluide, ladite ligne de liaison (19) étant installée à l'intérieur de ladite face intérieure (24), **caractérisé en ce qu'**il comprend à chaque extrémité du conduit (23) de canalisation un embout répartiteur (31) assurant pour la ligne de liaison (19) une transition étanche entre l'extérieur et l'intérieur du conduit (23) de canalisation, la ligne s'étendant sans discontinuité ni raccordement de l'extérieur de l'un des embouts (31) à travers cet embout, à travers le conduit (23) de canalisation et à travers l'autre embout (31) jusqu'à l'extérieur dudit autre embout (31).

2. Faisceau selon la revendication 1, **caractérisé en ce que** la ligne de liaison (19) est montée de façon à ce qu'une face extérieure (27) de la ligne de liaison (19) soit en contact avec le fluide canalisé par le conduit (23).

3. Faisceau selon la revendication 2, **caractérisé en ce que** la face extérieure (27) de la ligne (19) est une face périphérique de la ligne (19) et se trouve en contact avec le fluide par tout son pourtour.

4. Faisceau selon l'une des revendication 1 à 3, **caractérisé en ce que** sur une partie au moins de la longueur du conduit (23), la ligne (19) est mécaniquement libre à l'égard du conduit (23).

5. Faisceau selon l'une des revendications 1 à 4, **caractérisé en ce que** la ligne (19) et le conduit (23) sont souples.

6. Faisceau selon l'une des revendications 1 à 5, **caractérisé en ce que** le conduit (23) est lui-même logé dans l'espace intérieur d'un second conduit (123) de plus grand diamètre, canalisant un second fluide dans le volume annulaire (126) compris entre une face intérieure (124) du second conduit (123) et une face extérieure (58) dudit conduit de canalisation (23).

7. Faisceau selon l'une des revendications 1 à 6, **caractérisé en ce qu'**il y a au moins deux lignes de liaison (19,119) s'étendant à peu près parallèlement l'une à l'autre à l'intérieur dudit conduit de canalisation (23).

8. Faisceau selon l'une des revendications 1 à 7, **caractérisé en ce qu'**au moins une ligne de liaison précitée (119) est elle-même un conduit pour un fluide.

9. Faisceau selon l'une des revendications 1 à 8, **caractérisé en ce que** la ligne de liaison est un câble.

10. Faisceau selon l'une des revendications 1 à 9, **caractérisé en ce qu'**il comprend à l'une au moins des extrémités du conduit de canalisation (23) un embout répartiteur (31) assurant, pour la ligne de liaison (19) une transition entre l'extérieur et l'intérieur du conduit de canalisation (23).

11. Faisceau selon la revendication 10, **caractérisé en ce que** la ligne de liaison (19) n'est positioneée relativement au conduit de canalisation (23) que par l'intermédiaire dudit embout répartieur (31) a l'une au moins des extrémités du conduit de canalisation (23).

12. Faisceau selon la revendication 10 ou 11, **caractérisé en ce que** chaque embout répartiteur (31) comprend :
- un passage (33,133) à travers lequel la ligne de liaison (19) s'étend de manière continue ;
- un premier moyen d'étanchéité (34 ;134), pour assurer l'étanchéité entre le pourtour dudit passage (33,133) et la surface extérieure de la ligne (19) à l'égard du fluide canalisé par ledit conduit de canalisation (23) ;
- une chambre (32) communiquant avec le conduit de canalisation (23) et débouchant à l'extérieur par un raccord (39) pour l'arrivée ou respectivement le départ du fluide canalisé par ledit conduit de canalisation (23) ;
- un deuxième moyen d'étanchéité (64,88), indépendant du premier moyen d'étanchéité (34,134), pour équiper ledit raccord (39).

13. Faisceau selon la revendication 12, **caractérisé en ce que** le passage (33,133) est sensiblement axial et le raccord (39) est disposé latéralement.

14. Faisceau selon la revendication 12 ou 13, **caractérisé en ce que** le premier moyen d'étanchéité comprend un presse-étoupe (34) ou dispositif analogue (134) permettant de convertir un serrage axial en un appui d'étanchéité radial.

15. Faisceau selon l'une des revendications 12 à 14, **caractérisé en ce que** le passage (133) est formé dans une douille (66) qui est supportée en libre rotation axiale dans un corps (61) de l'embout (31).

16. Faisceau selon la revendication 15, **caractérisé en ce que** la ligne de liaison (19) est librement rotative sur elle-même relativement à l'ensemble du conduit de canalisation (23) et dans un embout répartiteur (31) à chaque extrémité du conduit de canalisation.

17. Faisceau selon l'une des revendications 12 à 16, **caractérisé en ce que** l'embout répartiteur (31) comprend au moins deux raccords (39) par lesquels la chambre (32) communique avec l'extérieur pour distribuer le fluide canalisé à au moins deux points de destination ou le collecter en provenance d'au moins deux sources.

18. Faisceau selon l'une des revendications 10 à 17, **caractérisé par** un dispossitif à joint tournant (166,169) entre l'une au moins des extrémités du conduit de canalisation (23) et l'embout répartiteur (31) correspondant.

19. Faisceau selon l'une des revendications 10 à 18, **caractérisé en ce qu'**il comprend une enveloppe (51) habillant l'embout répartiteur (31) et présentant trois sorties, une (52) pour le conduit de canalisation (23), une (54) pour l'arrivée/départ de fluide et une (53) pour la ligne de liaison (19).

20. Faisceau selon la revendication 19, **caractérisé en ce que** l'enveloppe (51) est équipée d'un support de faisceau (57).

21. Faisceau selon l'une des revendications 1 à 20, **caractérisé en ce que** la ligne de liaison est axiale dans les extrémités du conduit de canalisation.

22. Robot industriel comprenant un socle (1), un organe mobile (3) relié au socle (1) par une structure à géométrie variable (4), et un faisceau (18) relié à l'organe mobile (3) **caractérisé en ce que** le faisceau (3) est conforme à l'une quelconque des revendications 1 à 21.

## Patentansprüche

1. Multifunktionsleitungsbündel mit einer Rohrleitung (23) für ein Fluid und zumindest einer Verbindungsleitung (19), die sich entlang der Rohrleitung (23) erstreckt, welche eine Innenseite (24) besitzt, die einen dem Fluid vorbehaltenen Raum (26) begrenzt, wobei die genannte Verbindungsleitung (19) innerhalb der genannten Innenseite (24) angeordnet ist, **dadurch gekennzeichnet, dass** es an jedem Ende der Rohrleitung (23) ein Verteileransatzstück (31) enthält, das für die Verbindungsleitung (19) einen dichten Übergang zwischen dem Äußeren und dem Inneren der Rohrleitung (23) gewährleistet, wobei die Leitung sich sprung- und übergangslos von außerhalb des einen Ansatzstücks (31) durch dieses Ansatzstück, durch die Rohrleitung (23) und durch das weitere Ansatzstück (31) nach außerhalb des genannten weiteren Ansatzstücks (31) erstreckt.

2. Bündel nach Anspruch 1, **dadurch gekennzeichnet, dass** die Verbindungsleitung (19) so montiert ist, dass eine Außenseite (27) der Verbindungsleitung (19) mit dem von der Rohrleitung (23) geführten Fluid in Kontakt steht.

3. Bündel nach Anspruch 2, **dadurch gekennzeichnet, dass** die Außenseite (27) der Leitung (19) eine Umfangsseite der Leitung (19) ist und über ihren gesamten Umfang mit dem Fluid in Kontakt steht.

4. Bündel nach einem der Ansprüche 1 bis 3, **dadurch gekennzeichnet, dass** zumindest über einen Teil der Länge der Rohrleitung (23) die Leitung (19) bezüglich der Rohrleitung (23) mechanisch frei liegt.

5. Bündel nach einem der Ansprüche 1 bis 4, **dadurch gekennzeichnet, dass** die Leitung (19) und die Rohrleitung (23) nachgiebig sind.

6. Bündel nach einem der Ansprüche 1 bis 5, **dadurch gekennzeichnet, dass** die Rohrleitung (23) selbst im Innenraum einer zweiten Rohrleitung (123) größeren Durchmessers aufgenommen ist, die ein zweites Fluid im zwischen Innenseite (124) der zweiten Rohrleitung (123) und Außenseite (58) der genannten Rohrleitung (23) gebildeten Ringraum (126) führt.

7. Bündel nach einem der Ansprüche 1 bis 6, **dadurch gekennzeichnet, dass** zumindest zwei Verbindungsleitungen (19, 119) bestehen, die innerhalb der genannten Rohrleitung (23) annährend parallel zueinander verlaufen.

8. Bündel nach einem der Ansprüche 1 bis 7, **dadurch gekennzeichnet, dass** zumindest eine vorgenannte Verbindungsleitung (119) selbst eine Rohrleitung für ein Fluid ist.

9. Bündel nach einem der Ansprüche 1 bis 8, **dadurch gekennzeichnet, dass** die Verbindungsleitung ein Kabel ist.

10. Bündel nach einem der Ansprüche 1 bis 9, **dadurch gekennzeichnet, dass** es zumindest an dem einen Ende der Rohrleitung (23) ein Verteileransatzstück (31) enthält, das für die Verbindungsleitung (19) einen Übergang zwischen Äußerem und Innerem der Rohrleitung (23) gewährleistet.

11. Bündel nach Anspruch 10, **dadurch gekennzeichnet, dass** die Verbindungsleitung (19) relativ zu der Rohrleitung (23) lediglich mittels des genannten Verteileransatzstücks (31) zumindest an dem einen Ende der Rohrleitung (23) positioniert ist.

12. Bündel nach Anspruch 10 oder 11, **dadurch gekennzeichnet, dass** jedes Verteileransatzstück (31) enthält:
- einen Durchgang (33, 133), durch den sich die Verbindungsleitung (19) kontinuierlich erstreckt,
- ein erstes Dichtmittel (34; 134), um die Dichtheit zwischen dem Umfang des genannten Durchgangs (33, 133) und der Außenseite der Leitung (19) bezüglich des Fluids zu gewährleisten, das von der genannten Rohrleitung (23) geführt wird,
- einen Raum (32), der mit der Rohrleitung (23) in Verbindung steht und über einen Anschluss (39) für den Zulauf bzw. Ablauf des von der genannten Rohrleitung (23) geführten Fluids nach außen mündet,
- ein zweites Dichtmittel (64, 88), das vom ersten Dichtmittel (34, 134) unabhängig ist und am Anschluss (39) vorgesehen ist.

13. Bündel nach Anspruch 12, **dadurch gekennzeichnet, dass** der Durchgang (33, 133) im wesentlichen axial verläuft und der Anschluss (39) seitlich angeordnet ist.

14. Bündel nach Anspruch 12 oder 13, **dadurch gekennzeichnet, dass** das erste Dichtmittel eine Stopfbuchse (34) oder eine analoge Vorrichtung (134) enthält, mit der es möglich ist, eine axiale Pressung in eine radiale Dichtabstützung umzuwandeln.

15. Bündel nach einem der Ansprüche 12 bis 14, **dadurch gekennzeichnet, dass** der Durchgang (133) aus einer Hülse (66) gebildet ist, die axial frei drehbar in einem Körper (61) des Ansatzstücks (31) gelagert ist.

16. Bündel nach Anspruch 15, **dadurch gekennzeichnet, dass** die Verbindungsleitung (19) relativ zu der gesamten Rohrleitung (23) und in einem Verteileransatzstück (31) an jedem Ende der Rohrleitung um sich selbst frei drehbar ist.

17. Bündel nach einem der Ansprüche 12 bis 16, **dadurch gekennzeichnet, dass** das Verteileransatzstück (31) zumindest zwei Anschlüsse (39) enthält, über die der Raum (32) mit dem Außenbereich in Verbindung steht, um das geführte Fluid an zumindest zwei Bestimmungspunkten auszugeben bzw. um es von zumindest zwei Quellen kommend aufzufangen.

18. Bündel nach einem der Ansprüche 10 bis 17, **gekennzeichnet durch** eine Drehverbindungsvorrichtung (166, 169) zwischen zumindest einem der Enden der Rohrleitung (23) und dem entsprechenden Verteileransatzstück (31).

19. Bündel nach einem der Ansprüche 10 bis 18, **dadurch gekennzeichnet, dass** es einen Mantel (51) enthält, der das Verteileransatzstück (31) umkleidet und drei Ausgänge aufweist, und zwar einen (52) für die Rohrleitung (23), einen (54) für den Fluidzulauf/-ablauf und einen (53) für die Verbindungsleitung (19).

20. Bündel nach Anspruch 19, **dadurch gekennzeichnet, dass** der Mantel (51) mit einem Bündelhalter (57) ausgestattet ist.

21. Bündel nach einem der Ansprüche 1 bis 20, **dadurch gekennzeichnet, dass** die Verbindungsleitung in den Enden der Rohrleitung axial verläuft.

22. Industrieroboter mit einem Sockel (1), einem beweglichen Glied (3), das über einen Aufbau veränderlicher Geometrie (4) mit dem Sockel (1) verbunden ist, sowie mit einem Bündel (18), das mit dem beweglichen Glied (3) verbunden ist, **dadurch gekennzeichnet, dass** das Bündel (3) einem der Ansprüche 1 bis 21 entspricht.

## Claims

1. Multifunctional cluster, comprising a pipe (23) for carrying a fluid and at least one connecting line (19) extending along the pipe (23) which possesses an inner face (24) delimiting the space (26) reserved for the said fluid, the said connecting line (19) being installed inside the said inner face (24), **characterized in that** the said cluster comprises, at each end of the pipe (23), a distributor nipple (31) ensuring for the connecting line (19) a leaktight transition between the outside and the inside of the pipe (23), the line extending, without discontinuity or junction, from outside one of the nipples (31) through this nipple, through the pipe (23) and through the other nipple (31) to the outside of the said other nipple (31).

2. Cluster according to Claim 1, **characterized in that** the connecting line (19) is mounted in such a way that an outer face (27) of the connecting line (19) is in contact with the fluid carried by the pipe (23).

3. Cluster according to Claim 2, **characterized in that** the outer face (27) of the line (19) is a peripheral face of the line (19) and is in contact over its entire periphery with the fluid.

4. Cluster according to one of Claims 1 to 3, **characterized in that** the line (19) is mechanically free with respect to the pipe (23) over at least part of the length of the pipe (23).

5. Cluster according to one of Claims 1 to 4, **characterized in that** the line (19) and the pipe (23) are flexible.

6. Cluster according to one of Claims 1 to 5, **characterized in that** the pipe (23) is itself housed in the inner space of a second pipe (123) of larger diameter, carrying a second fluid in the annular volume (126) contained between an inner face (124) of the second pipe (123) and an outer face (58) of the said pipe (23).

7. Cluster according to one of Claims 1 to 6, **characterized in that** there are at least two connecting lines (19, 119) extending approximately parallel to one another inside the said pipe (23).

8. Cluster according to one of Claims 1 to 7, **characterized in that** at least one abovementioned connecting line (119) is itself a pipe for a fluid.

9. Cluster according to one of Claims 1 to 8, **characterized in that** the connecting line is a cable.

10. Cluster according to one of Claims 1 to 9, **characterized in that** it comprises, at at least one of the ends of the pipe (23), a distributor nipple (31) ensuring for the connecting line (19) a transition between the outside and the inside of the pipe (23).

11. Cluster according to Claim 10, **characterized in that** the connecting line (19) is positioned in relation to the pipe (23) solely by means of the said distributor nipple (31) at at least one of the ends of the pipe (23).

12. Cluster according to Claim 10 or 11, **characterized in that** each distributor nipple (31) comprises:
- a passage (33, 133), through which the connecting line (19) extends continuously;
- a first sealing means (34; 134) for ensuring leaktightness between the periphery of the said passage (33, 133) and the outer surface of the line (19) with respect to the fluid carried by the said pipe (23);
- a chamber (32) communicating with the pipe (23) and issuing outside via a connection piece (39) respectively for the admission or the discharge of the fluid carried by the said pipe (23);
- a second sealing means (64, 88), independent of the first sealing means (34, 134), for equipping the said connection piece (39).

13. Cluster according to Claim 12, **characterized in that** the passage (33, 133) is substantially axial, and the connection piece (39) is arranged laterally.

14. Cluster according to Claim 12 or 13, **characterized in that** the first sealing means comprises a stuffing box (34) or similar device (134) making it possible to convert axial clamping into radial sealing bearing contact.

15. Cluster according to one of Claims 12 to 14, **characterized in that** the passage (133) is formed in a bush (66) which is supported in terms of free axial rotation in a body (61) of the nipple (31).

16. Cluster according to Claim 15, **characterized in that** the connecting line (19) is freely rotatable on itself in relation to the entire pipe (23) and in a distributor nipple (31) at each end of the pipe.

17. Cluster according to one of Claims 12 to 16, **characterized in that** the distributor nipple (31) comprises at least two connection pieces (39), via which the chamber (32) communicates with the outside in order to distribute the carried fluid to at least two destination points or to collect it from at least two sources.

18. Cluster according to one of Claims 10 to 17, **characterized by** a rotary-joint device (166, 169) between at least one of the ends of the pipe (23) and the corresponding distributor nipple (31).

19. Cluster according to one of Claims 10 to 18, **characterized in that** it comprises a casing (51) cladding the distributor nipple (31) and having three ports, one (52) for the pipe (23), one (54) for the admission/discharge of fluid and one (53) for the connecting line (19).

20. Cluster according to Claim 19, **characterized in that** the casing (51) is equipped with a cluster support (57).

21. Cluster according to one of Claims 1 to 20, **characterized in that** the connecting line is axial in the ends of the pipe.

22. Industrial robot, comprising a base (1), a moveable member (3) connected to the base (1) by means of a structure of variable geometry (4), and a cluster (18) connected to the moveable member (3), **characterized in that** the cluster (3) is according to any one of Claims 1 to 21.
